# EUROPEAN PATENT SPECIFICATION

(11) **EP 1 904 762 B1**
(45) Date of publication and mention of the grant of the patent: **20.01.2010**
(21) Application number: 06762384.3
(22) Date of filing: 04.07.2006
(51) Int. Cl.: F16H 7/08, F16H 7/18

(54) **GUIDE FOR TRANSMISSION DEVICE**
FÜHRUNG FÜR KRAFTÜBERTRAGUNGSVORRICHTUNG
GUIDE POUR DISPOSITIF DE TRANSMISSION

(30) Priority: 20.07.2005 EP 05076671
(43) Date of publication of application: 02.04.2008
(73) Proprietor: DSM IP Assets B.V., 6411 TE Heerlen (NL)
(72) Inventor: AKEN VAN, Harold, Henricus, Johannus, Paulus, Gera, NL-6431 XH Hoensbroek (NL); DASSEN, Tim, Willem, Joseph, Leonard, NL-6365 CS Schinnen (NL)
(74) Representative: van der Ploeg, Antonius Franciscus M.J.
(86) International application number: PCT/EP2006/006493
(87) International publication number: WO 2007/009587

(56) References cited:
- EP-A- 1 291 553
- EP-A- 1 312 830
- DE-A1- 4 310 306
- DE-A1- 19 851 601
- PATENT ABSTRACTS OF JAPAN vol. 2000, no. 15, 6 April 2001 (2001-04-06) & JP 2000 337462 A (BORG WARNER AUTOMOTIVE KK), 5 December 2000 (2000-12-05)
- PATENT ABSTRACTS OF JAPAN vol. 2000, no. 12, 3 January 2001 (2001-01-03) & JP 2000 266143 A (DAIDO KOGYO CO LTD), 26 September 2000 (2000-09-26)
- PATENT ABSTRACTS OF JAPAN vol. 2000, no. 25, 12 April 2001 (2001-04-12) & JP 2001 227605 A (NTN CORP), 24 August 2001 (2001-08-24)

## Description

The invention relates to a synthetic resin guide for a transmission device such as those used in a motor vehicle engine or the like for transmitting power from a driving sprocket or pulley to one or more other driven sprockets or pulleys.

Such a guide generally comprises:
(i) a slide rail for longitudinal sliding engagement with an endless transmission medium like chains, belts and other power transmission media, and
(ii) a rail supporting body, extending longitudinally along the back of the slide rail, comprising two flanges, two support elements, a web layer, and reinforcing ribs, the two flanges being an upper flange directly engaged to the backside of the sliding rail and a lower flange.

The reinforcing ribs are generally positioned between the two flanges, whereas the two support elements are generally positioned near both ends of the guide. The guide may be a fixed guide, or a movable guide associable with a tensioner. In a movable guide, the two support elements generally consist of a boss, having a mounting hole for pivotally receiving a mounting pin or bolt, and a tensioner abutting portion. In a fixed guide the two support elements generally consist of two bosses, or a boss and another fixation element, each having a mounting hole for receiving a mounting pin or bolt.

In general, in a transmission device for a motor vehicle engine or the like, in which mechanical power is transmitted by a medium such as a chain, belt or the like, a movable and/or a fixed guide is attached to a body frame, such as an engine block wall, by a mounting bolt, a pin or the like. The chain, belt, or other power transmission medium, travels in sliding contact with the guide. In the timing transmission of an automobile engine or the like which utilizes a timing chain, the movable guide, which may be in the form of a tension lever or rotational chain tensioner arm or the like, is usually pivotally mounted on the engine block, or on another suitable frame, by a mounting bolt, pin or the like. The guide cooperates with a tensioner, positioned at the tensioner-abutting portion and maintains the guide sliding contact with the chain and imparts appropriate tension to the chain to prevent transmission failure due to excess tension or excess loosening of the chain. A fixed guide, such as a guide rail or the like, limits the power transmission medium to a predetermined travelling path to prevent vibration noise, side vibration, and disengagement.

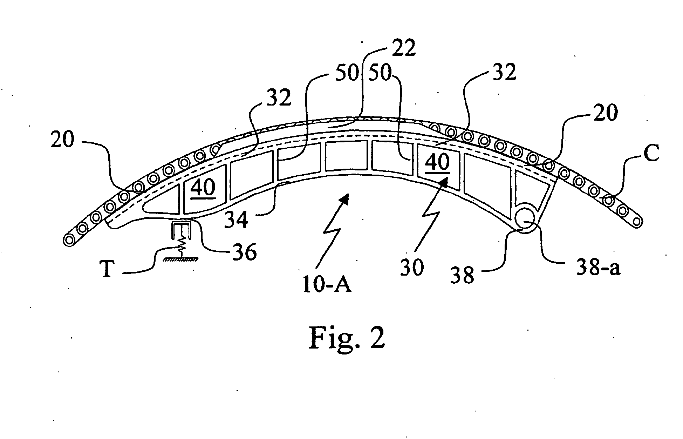

Such a guide is known for example, from EP-1291553-A2 which constitutes the closest prior art. EP-1291553-A2 describes a conventional synthetic resin guide as depicted in FIG. 2. FIG. 2 illustrates an example of a conventional synthetic resin guide (10-A) for a tensioner lever. The guide (10-A) comprises a slide rail (20), which is in sliding contact with a travelling chain (C), and a rail supporting body or body (30) provided on the backside of the slide rail (20) and extending along the longitudinal direction of the slide rail body. The rail supporting body (30) includes two support elements (36) and (38)..The second support element (38) is a boss having a mounting hole (38-a) for pivotally receiving a mounting pin or bolt secured to an engine block wall or an other suitable frame. The first support element (36) is tensioner-abutting portion, which cooperates with a tensioner (T) for providing appropriate tension to prevent transmission failure resulting from excessive stretching, or excessive loosening, of the chain. The synthetic resin guide (10-A) includes a plurality of thick reinforcing ribs (50), each formed at suitable intervals along the rail supporting body (30), to enhance the mechanical properties and toughness of the guide (10-A). The ribs reinforce the guide while serving a weight-reducing function. In Fig. 2 the ribs are positioned nearly perpendicular to the slide rail. In daily practice, also tilted ribs as well as other configurations are applied.

A general problem guide producers are confronted with is to provide lightweight and inexpensive guides, which have superior mechanical strength and wear resistance. For the slide rail generally unfilled resin having good wear resistance and heat resistance is used. However, when the guide is integrally moulded from such a material, the guide has poor mechanical strength. When the cross section dimensions of the constructive elements are increased to compensate for the adequate strength of the selected material, the thickness of the guide is increased, and the space taken up by the guide, when mounted on an engine block, is also increased. To overcome that problem, the rail supporting body may be prepared from a different material. The strength of the rail supporting body may be enhanced by dispersing a powdered inorganic compound or the like, or especially, long fibre-shaped inorganic elements, in the polymer.

As mentioned in EP-1291553-A2, even the conventional synthetic resin guide with a rail supporting body made of a glass fibre reinforced polymer has several problems preventing it from exhibiting good mechanical properties and toughness. As interpreted in EP-1291553-A2, the problem could be strongly related to the orientation of the glass fibbers in the moulded guide. As a solution for a guide with improved mechanical properties, EP-1291553-A2 proposes a guide formed by injection moulding, wherein the reinforcing ribs extend in directions such that the flow of the synthetic resin during injection moulding substantially follows the longitudinal directions of the reinforcing ribs. According to EP-1291553-A2, in order for the reinforcing ribs to extend in a direction following the flow of resin during injection moulding, any arrangement such as an S-shaped arrangement, a curved arrangement, a truss-shaped arrangement, a arc-shaped arrangement, a honeycomb-shaped arrangement, or the like, may be used.

A problem with the solution of EP-1291553-A2 is that it might likewise work well for a guide with a rail supporting body made of a fibre reinforced material, but has limited effect for a guide integrally made of an unfilled material. At the same time there is a need to further increase the load bearing properties of guides in general.

Accordingly, the object of the invention is to solve the above-mentioned problems and to provide a synthetic resin guide for a transmission device, which exhibits greater strength and toughness than the conventional guides.

This object has been achieved with the guide according to the invention wherein the rail supporting body comprises a first tilted rib extending from a position (P-1 a) at the lower flange near the first support element to a position (P-1 b) at the upper flange near the centre of the guide and a second tilted rib extending from a position (P-2a) at the lower flange near the second support element to a position (P-2b) at the upper flange near the centre of the guide, and wherein both the first and the second tilted rib have an at least partial concave shape.

The effect of the measures according to the invention, wherein the guide comprises a first tilted rib and a second tilted rib as described above is that the guide according the invention has improved mechanical properties, exhibited by a higher allowable maximum load, compared to a conventional synthetic resin guide of similar dimensions and weight and made of the same material. This effect is achieved both in 2K-guides with a rail supporting body made of a fibre reinforced material, and in 1K-guides integrally made of a non-reinforced material. The advantage of the guide according to the invention is that one can use this guide without increasing the weight in transmission devices involving higher chain tensions, or one can save weight by using a guide with thinner ribs and/or save space by using a guide with smaller dimensions for the same tension loads. The tension loads can be substantially higher, with increments in the range of 10-25% and in particular case even 30% and higher being possible, whereas on the other hand also weight savings in the range of 10-30% and even higher can be achieved. A further advantage is that guide according to the invention integrally made of an unfilled material can still be used for higher load bearings where in the past one had to pass to 2K-composite guides, thus providing the guide producer with a substantial saving on production costs.

With the centre of the guide is herein understood the centre line Y-Y' laying in the plane of the web layer and standing perpendicular to the line X-X' passing through the centre points (S-1) and (S-2) of the two support elements.

With the wording of positions (P-1 b) and (P-2b) being near the centre of the guide is herein understood that the distance (d) of each of these positions from the centre line Y-Y' is about 1/6 times the distance (L) between the centre point (S-1) of the first support element and the centre point (S-2) of the second support element, or less.

With the centre point (S) of a support element is herein understood, where the support element has a mounting hole, the centre of the mounting hole. Where the support element does not have a mounting hole, such as is the case with an abutting portion, with the centre of the support centre is herein understood the position at the periphery of the support element for which the tangent in the plane of the web layer at that peripheral position passes through the centre point of the other support element.

With the wording of position (P-1a) being near the first support element is herein understood that the length of the projection (P3) of the line (S-1) -(P-1 a) on the line X-X' is both about ¼ of the distance (L) between the centre points (S-1) and (S-2) of the two support elements, or less.

Analogously, with the wording of position (P-2a) being near the second support element is herein understood that the length of the projection (P4) of the line (S-2)-(P-2a) on the line X-X' is also about ¼ of the distance (L) between the centre points (S-1) and (S-2) of the two support elements, or less.

Preferably, the distance (D) between the positions (P-1b) and (P-2b) at the upper flange, from which the two tilted ribs extend towards the lower flange, is less than 1/5 times (L), more preferably less than 1/6 times (L) and still more preferably less than 1/10 times, and in the most extreme situation, the positions (P-1 b) and (P-2a) coincide, i.e. D equals 0.

The positions (P-1a), (P-1 b), (P-2a) and (P-2b) at the lower and upper flanges between which the two tilted ribs extend, are preferably chosen such that the sum (S) of the lengths of the projection (P1) of the line (P-1a) - (P-1b) and of the projection (P1) of the line (P-2a) - (P-2b) on the line X-X' through the centre point (S-1) and (S-2) is at least 1/3 times the distance (L) between the centre points (S-1) and (S-2), i.e. the ratio D/L is at least 1/3.

With the expression "line (P-1a) - (P-1b)" is herein understood to the "line segment of the line passing through the position (P-1a) at the lower flange near the first support element and the position (P-1 b) at the upper flange near the centre of the guide, wherein the line segment of the said line is the line segment between the position (P-1 a) at the lower flange near the first support element and the position (P-1 b) at the upper flange near the centre of the guide".

Analogously, with the expression "line (P-2a) - (P-2b)" is herein understood to be the "line segment of the line passing through the position (P-2a) at the lower flange near the second support element and the position (P-2b) at the upper flange near the centre of the guide, wherein the line segment of the said line is the line segment between the position (P-2a) at the lower flange near the second support element and the position (P-2b) at the upper flange near the centre of the guide".

Analogously, similar expression will be used herein for other line segments as well.

Preferably the ratio S/L is in the range of 0.5-1.2, more preferably 0.6-1.0, most preferably 0.7-1.9. The higher the ratio of S/L the larger the effect of the two tilted ribs according to the invention is on the mechanical properties, resulting in an even stronger guide. Above a certain value for the ratio S/L, depending on the shape of the guide, this effect levels off.

In the guide according to the invention the ratio between the height (H), measured as the distance between the upper flange and the lower flange along the centre line Y-Y', and the length (L) is preferably at least 1/10, more preferably at least 1/9, 1/8 or even 1/7. The higher the ratio of H/L the larger the effect of the two tilted ribs according to the invention is on the mechanical properties, resulting in an even stronger guide.

In a preferred embodiment of the invention one or both of the two tilted ribs is connected to one of the two support elements. More preferably at least one of two tilted ribs is tangentially connected or nearly so, to one of the two support elements.

With a tangential connection is herein understood a connection between the rib and the support element at a contact point, whereby the tangential line through the rib (t-rib) at the contact point and the tangential line through the peripheral line of the support element at (t-supp) the contact point coincide or nearly coincide. Preferably, the tangential lines (t-rib) and (t-supp) make an angle (α) of at most 5°.

With a rib with a concave structure is herein understood a curved shaped rib having a declining slope over its whole length, when viewed upon from the perspective of the lower flange and going from the position of the rib at the lower flange near one of the two support elements to the position on the upper flange near the centre of the guide. For determining the slope of the rib over its entire length the guide is projected in an X-Y diagram in plane with the web layer of the guide, in such a way that the centre points (S-1) and (S-2) fall on the positive X-axis and the positions (P-1 b) and (P-2b) fall inside the positive X-Y quadrant of the X-Y diagram. The slope can then be determined for the projection line representing the curved shape rib for each position of that line, by drawing the tangential line for that line and determining the slope of that line relative to the X-axis.

In an even more preferred embodiment the two tilted ribs form a bow-like construction, meaning that the tilted ribs have a curved shape with a concave arrangement and positions (P-1b) and (P-2a) coincide, such that the two tilted ribs form a single curved shape or bow-like construction.

In another preferred embodiment one or both of the tilted ribs have an S-shape, or the mirror image thereof, defined by a concave portion and a convex portion connected by an inflection point, with the convex part near the lower flange and the concave part near the upper flange.

With a rib with a convex portion is herein understood a part of a curved shaped rib having an increasing slope over the length of that part of the rib, when viewed upon from the perspective of the lower flange and going from a position of the rib closer to the lower flange near one of the two support elements to a position closer to the upper flange near the centre of the guide. The slope of the rib is determined in the same way as described above for the convex shaped tilted rib.

The advantage of the embodiments of the guide according to the invention, wherein one or both tilted ribs have a concave shape, or an S-shape or mirror image thereof with a concave part near the centre of the guide, is that the mechanical strength of the guide is further enhanced. This effect is further enhanced when the said two tilted ribs form an arc-shape construction and in particular with the bow-like construction.

The guide according to the invention and the preferred embodiments thereof described above may comprise, as part of the rail supporting body, next to the said first and second tilted ribs, at least one further rib. The further ribs can be radial ribs as well as longitudinal ribs.

With a radial rib is herein understood a rib with extends from a position on the lower flange to a position on the upper flange, just like conventional ribs in conventional guides. Such a further rib may be a vertical rib as well as a tilted rib. With a vertical rib is herein understood a rib that runs parallel, or nearly so to the centre line Y-Y', and has a perpendicular position or nearly so, relative to the slide rail.

With a longitudinal rib is herein understood a rib that may extend from a position on one flange, but not necessarily so, to another position not located on or beyond the other flange.

In one preferred embodiment, the at least one further rib is radial rib located in an extreme area (A) or (B) of the guide, wherein extreme area (A) is defined as the area enclosed by the first tilted rib and extreme parts of the two flanges near the first support element and extreme area (B) is defined by the area enclosed by the second tilted rib and extreme parts of the two flanges near the second support element. Such a radial rib located in one of the extreme areas (A) and (B) contributes more to the mechanical strength of the guide than a radial rib in the centre area (C) defined by the area enclosed by the first and the second tilted ribs and central parts of the two flanges.

Preferably, the radial rib located in the extreme area (A) or (B) is a tilted radial rib, which is tilted in the same direction as the nearest of the first and second tilted ribs. More preferably the tilted radial rib has an S-shape or curved shape similar as described above for the said first and second tilted ribs.

Also preferably, the radial rib is tangentially connected or nearly so, to one of the two support elements.

More preferably, both the radial rib and the nearest of the first and second tilted ribs are tangentially connected or nearly so, to one of the two support elements.

In another preferred embodiment, the further rib is a longitudinal rib located in the centre area (C), wherein the longitudinal rib extends from a position on the lower flange to a position on one of the said first and second tilted ribs. The position on the lower flange may be at a peripheral position of one of the two support elements.

Preferably the longitudinal rib is tangentially connected to the lower flange, more Preferably, the longitudinal rib is tangentially connected to one of the two support elements on the lower flange.

In a particularly preferred embodiment of the invention, the guide comprises next to first and second tilted ribs a longitudinal rib in the area (C) tangentially connected to one of the two support elements and at least one radial rib in one of the extreme areas (A) and (B) tangentially connected or nearly so to the other support element.

A rail supporting body in a guide for a transmission device generally comprises, next to the ribs, the flanges and the two support elements, a web layer positioned between the two flanges. The web layer and the two flanges provide the guide with a generally 1-shaped cross-section. The web layer acts as a spacer for the two flanges and contributes to the strength and the stiffness of the guide. In conventional synthetic resin guides, the web layer generally consists of polymeric material. According to the state of the art, sometimes a reinforcing metal plate is used to strengthen the web layer in order to further enhancing the mechanical properties of the guide. The reinforcing metal plate is integrated in the central web layer during the moulding process for making the guide, and such guides are known as "slide-in lever".

In contrast to the above, it has been found during the present invention, that with the guide according to the invention, the mechanical properties of the guide have improved to such an extent that the dimensions of the central web layer may even be reduced, thus saving weight while maintaining good mechanical properties.

In a preferred embodiment of the invention, the web layer comprised by the central area (C) comprises at least one recess. A recess is herein understood an area or section of the web layer with a thickness that is less than the thickness of the web layer in the extreme areas (A) and (B). In case the web layer does not have one fixed thickness in the extreme areas (A) and (B), with a recess in the central area (C) is herein understood that the average thickness of the web layer in the central area (C) is less than the average thickness of the web layer in the extreme areas (A) and (B). In a more preferred embodiment of the invention, the web layer area comprised by the central area (C) comprises at least one hole. In a still more preferred embodiment of the invention, the central area (C) does not comprise any web layer at all. The advantage of the guide according to the invention wherein the central area (C) comprises a web layer area with at least one recess or a one hole or no web layer at all as described above is that the guide is of less weight while the good mechanical properties are maintained.

In a particularly preferred embodiment of the invention the guide is an integrally moulded guide or a composite guide comprising, next to the first and second tilted ribs no further ribs, and wherein both the first and second tilted rib have an at least partial concave shape and the central area (C) comprises a web layer area with at least one recess or at least one hole or no web layer at all.

In order to prevent, during practical use in a transmission device or alike with an endless transmission medium, escaping of the endless transmission medium from the longitudinal sliding engagement with the slide rail, the guide according to the invention may be provided with two longitudinal extending peripheral rims on the sliding rail and/or on the rail supporting body, thus forming a sliding shoe for the endless transmission medium.

The guide according to the invention may be made from a single material or of a combination of different materials.

The slide rail is preferably made from a material that has the required wear resistance and heat resistance.

Suitable materials having wear resistance and heat resistance properties, include non-reinforced thermoplastic materials, preferably polyamides, for example, polyamide-4,6 and polyamide-6,6. More preferably, polyamide-4,6 is used.

The non-reinforced thermoplastic material may comprise fillers, preferably fillers that enhance the wear resistance and/or heat resistance. Suitable fillers include molybdenum disulphide, boron nitride, glass beads, silica balls, Teflon (PTFE), silicon resin powder, copper powder, tin powder and the like.

If the guide is made from two different materials, the rail supporting body is preferably moulded from a material with enhanced mechanical properties.

Suitable materials having enhanced mechanical properties include mineral filled and / or fibre reinforced thermoplastic materials. Preferably, the thermoplastic material comprises a reinforcement agent. Suitable reinforcement agents include glass fibbers, carbon fibbers and aramide fibbers Suitable thermoplastic materials include polyamides, for example, polyamide 6, polyamide-6,6, polyamide-4,6, semi-aromatic polyamides and co-polyamides of one or more of these polyamides. Preferably, fibre reinforced polyamide-4,6 and polyamide-6,6, more preferably, fibre reinforced polyamide-4,6, is used.

If the guide is made from a single material the slide rail and the rail supporting body are preferably molded integrally in one step from a material that has the required wear resistance and heat resistance. In that case the slide rail and the upper flange of the rail supporting body form a single structural element, while the top surface of the upper flange at the same time forms the gliding surface of the slide rail.

Where the guide is a composite structure made of a non-integral slide rail and a separate rail supporting body, the two parts may be engaged to each other by any method that is suitable for engaging two moulded synthetic resin parts. Suitable methods known in the art for engaging a slide rail and a rail supporting body include, for example, a 2K injection melt fusion process, a dove tail construction, mechanical fixtures (clips, toes), adhesion and envelopment or sandwich moulding. Also combinations of such methods may be used.

Sandwich moulded guides and a process for making these is described for example in EP-1267097-A1 and US-2004/0058763-A1. A guide comprising a slide rail mechanically fixed to a rail supporting body and a process for making this is described for example in EP-1471285 and JP-2000097300-A. A guide with a dovetail joint between the slide rail and the rail supporting body is described, for example, in EP-279934-A1. A 2K injection melt fusion process for making a composite guide is described, for example, in EP-1338828-A2 and JP-2004150552-A. An adhesive joint with the help of an adhesion agent is described, for example, in EP882909.

Preferably, the slide rail or guide the guide as a whole is annealed after moulding at elevated temperature. The effect thereof is that the wearing properties of the slide rail are enhanced. In particular with polyamide-4,6 used as the polymer in the slide rail, the wearing resistance is significantly enhanced.

The invention is further elucidated with the following figures and descriptions thereof.
FIG.1 is a front elevation view illustrating the use of a fixed guide and a movable guide in a transmission device.
FIG. 2 is a front view illustrating an example of a conventional movable guide for a transmission device.
FIG. 3 is a schematic front elevational view of a not claimed movable guide.
FIG. 4 is a schematic front elevational view of a not claimed movable guide.
FIG.5A and 5B are schematic front elevational views of not claimed movable guides.
FIG. 6 is a schematic front elevational view of a movable guide in accordance with an embodiment of the invention.
FIG. 7 is a schematic front elevational view of a movable guide in accordance with an embodiment of the invention.
FIG. 8 is a schematic front elevational view of a movable guide in accordance with an embodiment of the invention.
FIG. 10 is a schematic front elevational view of a movable guide in accordance with an embodiment of the invention.
FIG. 11 is a cross-sectional view of a movable guide in accordance with an embodiment of the invention.
FIG. 12 is a schematic front elevational view of a movable guide in accordance with an embodiment of the invention
FIG. 13 is a cross sectional view of movable guide in accordance with an embodiment of the invention

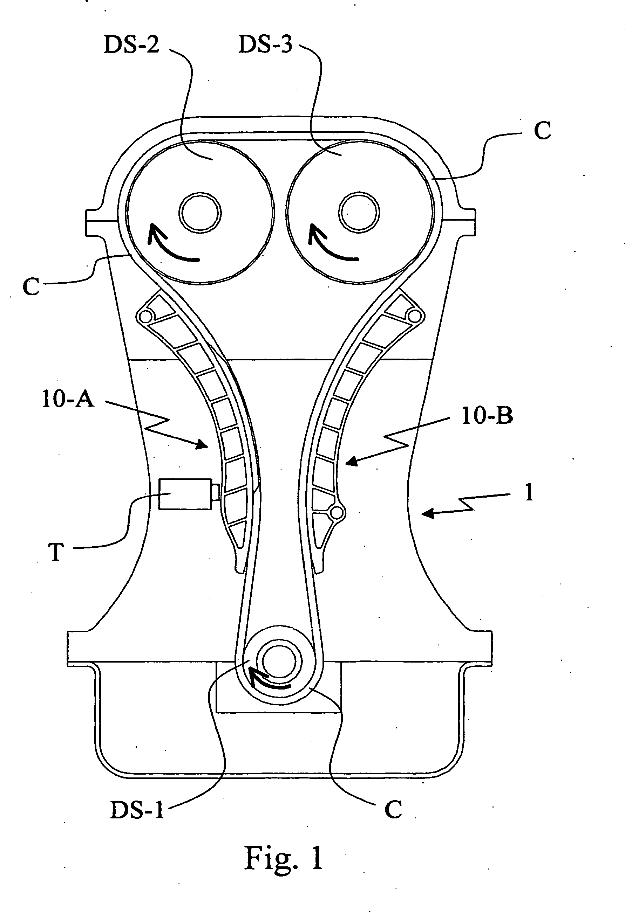

FIG. 1 shows a front elevational view of a transmission device (1) with two synthetic resin guides (10-A) and (10-B), more particular two conventional synthetic resin guides. In the transmission device of FIG. 1, a movable guide (10-A) is used in conjunction with a circulation transmission chain (C), which is in a driving engagement with a driving sprocket (DS-1) and a pair of driven sprockets (DS-2 and DS-3). The arrows in DS-1, DS-2 and DS-3 indicate the direction of rotation of the said sprockets and the transmission chain (C).The movable guide (10-A) is in sliding contact with, and applies, by means of a tensioner (T), tension to the transmission chain (C). A fixed guide (10-B), along whom the chain slides, is also provided. (10-A) and (10-B) are schematic representations of two conventional guides.

FIG. 2 shows an example of a conventional synthetic resin guide (10-A) for a tensioner lever. The guide (10-A) comprises a slide rail (20), which is in sliding contact with a travelling chain (C), and a rail supporting body (30) provided on the backside of the slide rail (20) and extending along the longitudinal direction of the slide rail body. The slide rail is provided with longitudinal extending peripheral rims (22) thus forming a sliding shoe for the travelling chain (C). The rail supporting body (30) includes two flanges (32 and 34), two support elements (36 and 38), a web (40) and reinforcing ribs (50). The two flanges are, respectively, an upper flange (32) directly engaged to the backside of the sliding rail (20) and a lower flange (34). In FIG. 2 one of the two support elements (38) is a boss having a mounting hole (38-a) for pivotally receiving a mounting pin or bolt secured to an engine block wall or another suitable frame. The other support element (36) is a portion of the lower flange (34), which portion cooperates with a tensioner (T) for providing appropriate tension to prevent transmission failure resulting from excessive stretching, or excessive loosening, of the chain. Such a support element is also known as tensioner abutting portion. The open space between the two flanges 32 and 34 and the reinforcing ribs 50 is closed with the web (40). The rail supporting body (30) comprises a plurality of reinforcing ribs (50), each formed at suitable intervals along the rail supporting body (30), to enhance the mechanical properties and toughness of the guide (10A). The ribs reinforce the guide while serving a weight-reducing function.

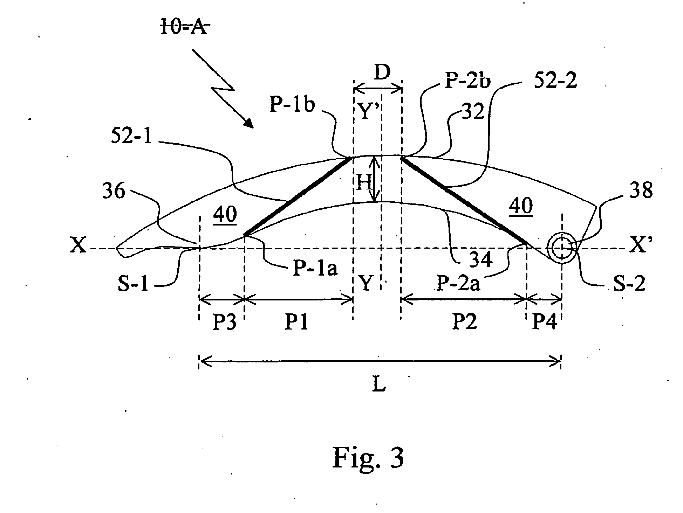

FIG. 3 shows a schematic front elevational view of a movable guide (10-A). The guide (10-A) shown in FIG. 3 comprises an upper flange (32), a lower flange (34), web (40), two support elements (36) and (38), support element (38) being a boss with a mounting hole (38-a), and two tilted ribs (52), being tilted rib (52-1) at the side of support element (36) and tilted rib (52-2) at the side of support element (38).

FIG. 3 also shows a base line X-X' and a centre line Y-Y'. Base line X-X' passes through the centre points (S-1) and (S-2) of the two support positions (36) and (38). Centre line Y-Y' lays in the plane of the web (40) and is standing perpendicular to the line X-X' at the midpoint of the line (S-1) - (S-2). In this view it is furthermore shown that tilted rib (52-1) runs from position (P-1 a) on the lower flange (34) near support element (36) to position (P-1 b) on the upper flange (32) near the centre of the guide. Tilted rib (52-2) runs from position (P-2a) on the lower flange (34) near the other support element (38) to position (P-2b) on the upper flange (32) near the centre of the guide

In FIG.3 furthermore the following projection lines and other auxiliary lines are shown. P1 is the projection of the line (P-1a)-(P-1b) on the line X-X'. P2 is the projection of the line (P-2a)-(P-2b) on the line X-X'. P3 is the projection of the line (S-1)-(P-1a) on the line X-X'. P4 is the projection of the line (P-2a)-(S-2) on the line X-X'. L is the distance between the centres (S-1) and (S-2) of the two support elements or less. D is the distance between the positions (P-1 b) and (P-2b). H is the height, measured as the distance between the upper flange (32) and the lower flange (34) along the centreline Y-Y'.

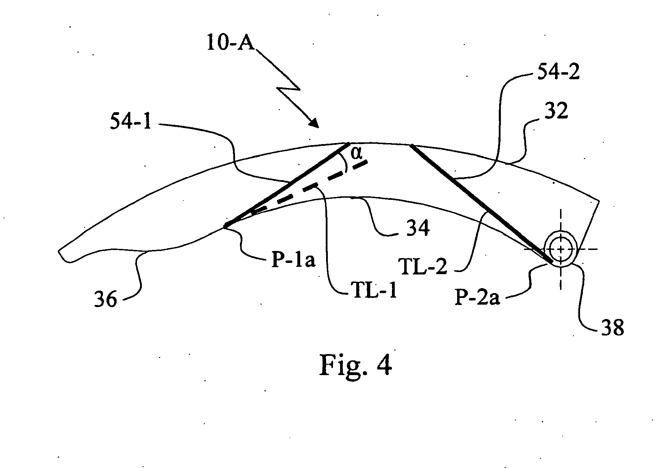

FIG. 4 shows a schematic front elevational view of a movable guide (10-A) comprising two tilted ribs (54) tangentially connected or nearly so, to the support elements (36) and (38). Tilted rib (54-1) is nearly tangentially connected to support element (36) at position (P-1a) on the lower flange (34) and tilted rib (54-2) is tangentially connected to support element (38) at position (P-2a). TL-1 is the tangential line for the peripheral line of the lower flange (34) at position (P-1 a). α is the angle between the tangential line (TL-1) and the line through tilted rib (54-1) at position (P-1a). TL-2 is the tangential line through the peripheral line of the support element (38) at the point of contact at position (P-2a). TL-2 coincides with the line through the tilted rib (54-2) at position P-2a.

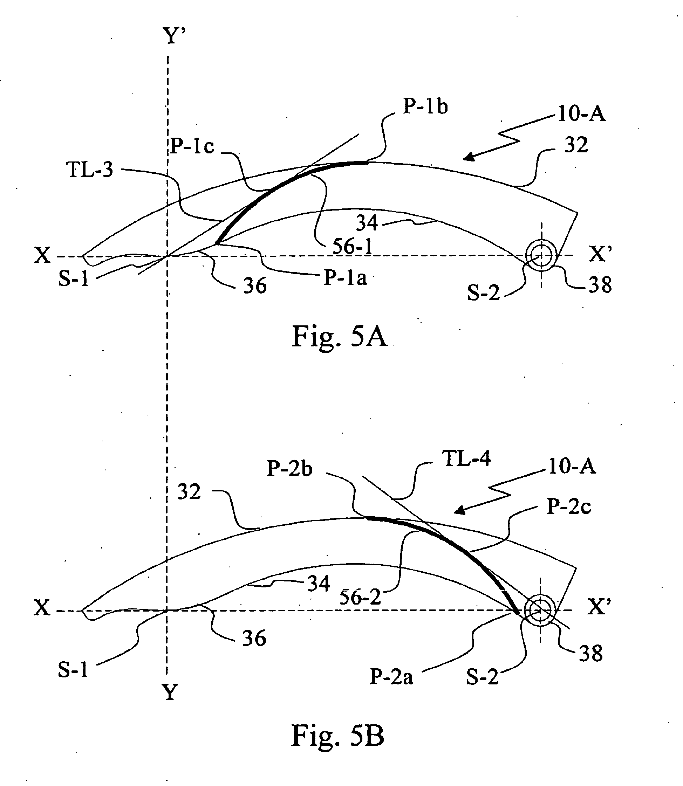

FIG. 5A and 5B show a schematic front elevational view of a movable guide (10-A) comprising a concave-shaped tilted rib (56-1) respectively (56-2).

FIG. 5A shows a schematic view of a movable guide (10-A) with a concave- shaped tilted rib (56-1) near support element (36). The movable guide is projected in an X-Y diagram in such a way that the centre points (S-1) and (S-2) of the support elements (36) and (38) fall on the positive X-axis and the positions (P-1 a) and (P-1 b) fall inside the positive X-Y quadrant of the X-Y diagram. In this figure the tangent line (TL-3) is show for the tilted rib (56-1) in point (P-1c). As is clear from FIG. 5A, viewed from the perspective of the lower flange, the concave shaped rib (56-1) has a declining slope over its whole length going from P-1a to P-1b.

FIG. 5B shows a schematic view of a movable guide (10-A) with a concave shaped tilted rib (56-2) near support element (38). The movable guide (10-A) is again projected in an X-Y diagram in such a way that the centre points (S-1) and (S-2) of the support elements (36) and (38) fall on the positive X-axis and the positions (P-2a) and (P-2b) fall inside the positive X-Y quadrant of the X-Y diagram. In this figure the tangent line (TL-4) is show for the tilted rib (56-2) in point (P-2c). As is clear from the figure, viewed from the perspective of the lower flange the concave shaped rib (56-2) has a declining slope over its whole length going from P-2a to P-2b.

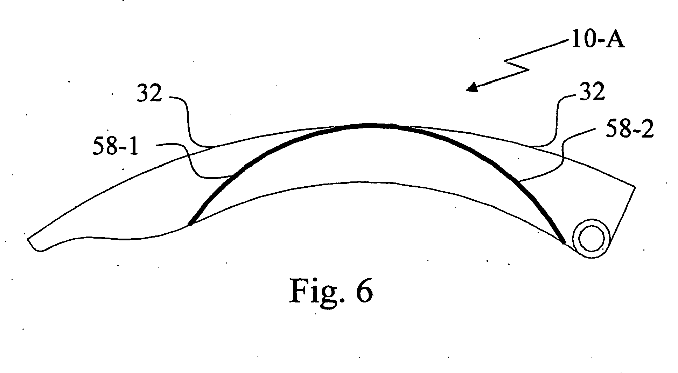

FIG. 6 shows a schematic view of a movable guide (10-A) with two concave-shaped titled ribs (58-1) and (58-2) forming together a bow-like structure.

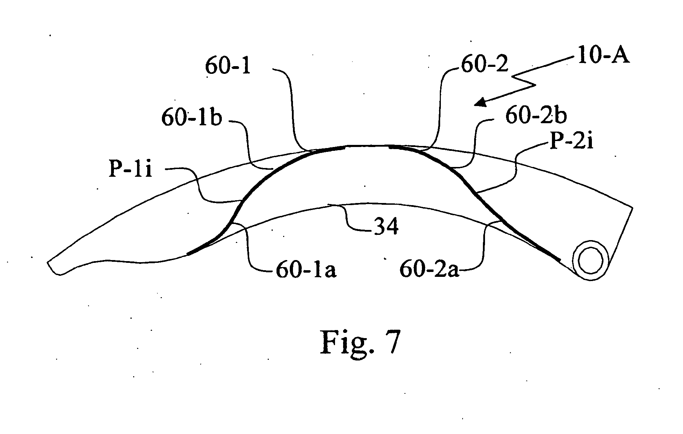

FIG. 7 shows a schematic view of a movable guide (10-A) with two titled ribs (60-1) and (60-2) having an S-shape (rib (60-1)) respectively the mirror image thereof (rib (60-2)). Each of these ribs (60-1) and (60-2) has a concave portion (60-1 b) respectively (60-2b) and a convex portion (60-1 a) and (60-2a) connected by an inflection point (P-1 i) and (P-2i) respectively. For both ribs the convex part is near the lower flange (34).

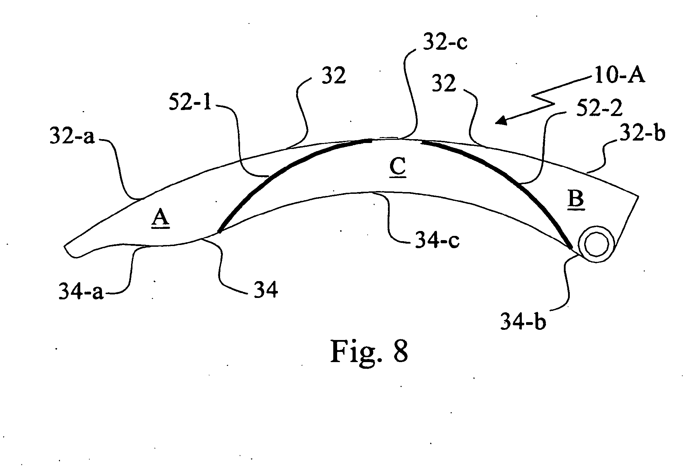

FIG. 8 shows a schematic view of a movable guide (10-A) with two titled ribs (52-1) and (52-2). The movable guide has been divided in 3 areas, extreme area (A), extreme area (B) and central area (C). Extreme area (A) is the area enclosed by the tilted rib (52-1) and the extreme parts (32-a) and (34-a) of the two flanges (32) and (34). Extreme area (B) is the area enclosed by the tilted rib (52-2) and the extreme parts (32-b) and (34-b) of the two flanges. Central area (C) is the area enclosed by the tilted ribs (52-1) and (52-b) and the central parts (32-c) and (34-c) of the two flanges (32) and (34).

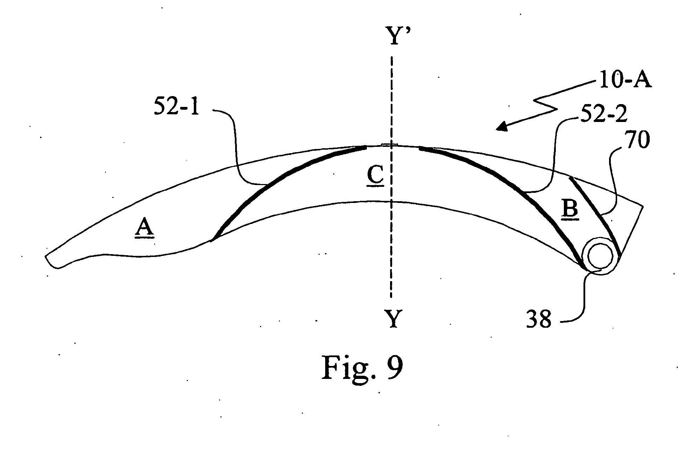

FIG. 9 shows a schematic view of a movable guide (10-A) with two titled ribs (52-1) and (52-2) and a further rib (70). Areas A, B and C have the meaning defined under FIG. 8. Rib (70) in FIG. 9 is a tilted radial rib located in area B. Rib (70) is tangentially connected, or nearly so, to support element (38). Also tilted rib (52-2) is tangentially connected to support element (38).

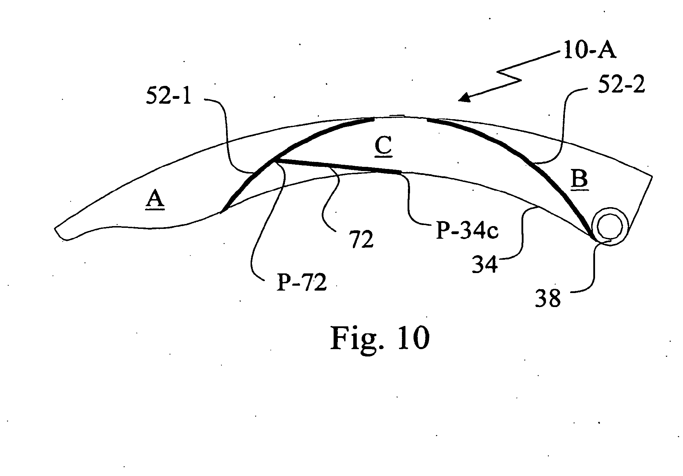

FIG. 10 shows a schematic view of a movable guide (10-A) with two titled ribs (52-1) and (52-2) and a further rib (72). Areas A, B and C have the meaning defined under FIG. 8. Rib (72) in FIG. 10 is a longitudinal rib located in the centre area (C) and extends from a position (P-34c) on the lower flange (34) to a position (P-72) on the tilted rib (52-1). The longitudinal rib (72) is tangentially connected to the lower flange (34).

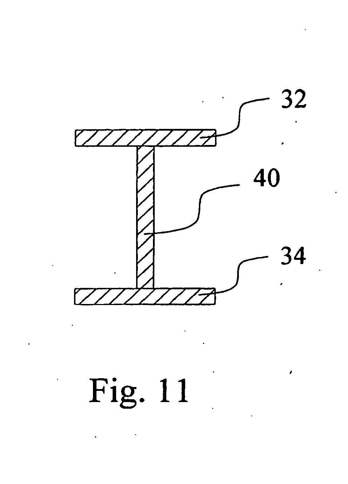

FIG. 11 shows a cross sectional view of FIG. 9 along the line Y-Y'. This figure illustrates the I-shaped cross section of the guide formed by the web layer (40) and the two flanges (32) and (34).

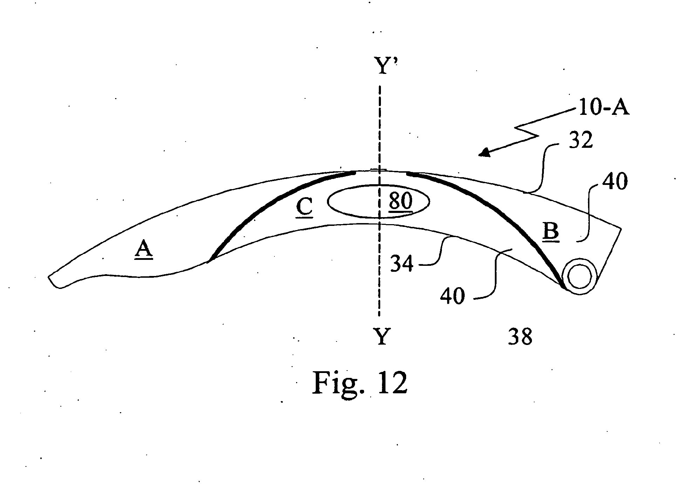

FIG. 12 shows a schematic elevational view of a guide (10-A) according to one embodiment of the invention. Areas A, B and C in figure 12 have the meaning defined under FIG. 8. The guide (10-A) in FIG. 12 has a hole (80) in area C of web (40).

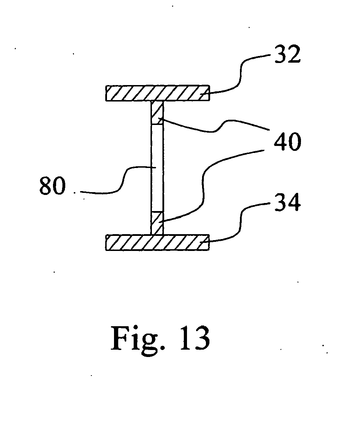

FIG. 13 shows a cross sectional view of guide (10-A) in FIG. 12 along line Y-Y' in FIG. 12. This cross sectional view illustrates that the I-shaped cross-section of the guide formed by the web layer (40) and the two flanges (32) and (34) is intermitted by the hole (80).

## Claims

1. A synthetic resin guide (10) for a transmission device comprising
(i) a slide rail (20), and
(ii) a rail supporting body (30) comprising two flanges (32, 34), two support elements, being a first support element (36) and a second support element (38), a web layer (40) and reinforcing ribs (50), the two flanges being an upper flange (32) directly engaged to the backside of the sliding rail (20) and a lower flange (34), and wherein both the first and the second tilted rib have an at least partial concave shape
**characterized in that** the rail supporting body (30) comprises a first tilted rib (52-1) extending from a position P-1a at the lower flange (34) near the first support element (36) to a position P-1b at the upper flange (32) near the centre of the guide (10) on the line Y-Y' laying in the plane of the web laver 40 and standing perpendicular to the line X-X' passing through the centre point of the first support element S-1 and the centre point of the second support element S-2, and a second tilted rib (52-2) extending from a position P-2a at the lower flange near the second support element (38) to a position P-2b at the upper flange (32) near the centre of the guide on the line Y-Y',
wherein the distance of positions P-1b and P-2b from the line Y-Y' is about 1/6 times or less the distance (L) between the centre point of the first support element S-1 and the centre point of the second support element S-2, the distance of position P-1a from the first support element is such that the
length of the projection (P3) of the line S-1, P-1a on the line X-X' is about ¼ times or less of the distance (L) between the centre point of the first support element S-1 and the centre point of the second support element S-2, the distance of position P-2a from the first support element is such that the length of the projection (P4) of the line S-1, P-2a on the line X-X' is about ¼ times or less of the distance (L) between the centre point of the first support element S-1 and the centre point of the second support element S-2.

2. A synthetic resin guide according to claim 1, wherein the sum (S) of the lengths of the projection (P1) of a line segment of the line passing through the position P-1a at the lower flange (34) near the first support element and the position P-1b at the upper flange (32) near the centre of the guide, wherein the line segment of the said line is the line segment between the position P-1a at the lower flange near the first support element and the position P1b at the upper flange near the centre of the guide and of the projection (P2) of a line segment of the line passing through the position P-2a at the lower flange near the second support element and the position P-2b at the upper flange near the centre of the guide, wherein the line segment of the said line is the line segment between the position P-2a at the lower flange (34) near the second support element and the position P-2b at the upper flange (32) near the centre of the guide on the line X-X' through centre point S-1 of the first support element (36) and centre point S-2 of the second support element (38) is at least 1/3 times the distance (L) between the centre points S-1 and S-2.

3. A synthetic resin guide according to claim 1 or 2, wherein the rail supporting body (30) comprises at least one radial rib (70) located in an extreme area (A, B) or of the guide (10), wherein extreme area (A) is defined as the area enclosed by the first tilted rib (52-1) and extreme parts (32-a, 34-a) of the two flanges (32, 34) near the first support element (36) and extreme area (B) is defined by the area enclosed by the second tilted rib (52-2) and extreme parts (32-b, 34-b) of the two flanges (32, 34) near the second support element (38).

4. A synthetic resin guide according to any of claims 1-3, wherein the guide comprises a longitudinal rib (72) located in centre area (C) of the guide (10), wherein centre area (C) is defined by the area enclosed by the first and the second titled ribs (52-1, 52-2) and central parts (32-C, 34-C) of the two flanges (32, 34).

5. A synthetic resin guide according to any of claims 1-4, wherein the web layer comprises at least.one recess or at least one hole (80) in centre area (C) of the guide (10), wherein centre area (C) is defined by the area enclosed by the first and the second tilted ribs (52-1, 52-2) and central parts (32-C, 34-C) of two flanges (32, 34), or wherein the central area (C) does not comprise a web layer at all.

6. A synthetic resin guide according to any of claims 1-5, wherein the slide rail (20) is made of a non-reinforced thermoplastic material.

7. A synthetic resin guide according to any of claims 1-5, wherein the rail supporting body (30) is made of a reinforced thermoplastic material,

8. A synthetic resin guide according to any of claims 1-5, wherein the slide rail (20) and the rail supporting body (30) are made of the same material and moulded integrally.

9. A synthetic resin guide according to any of claims 1-5, wherein the slide rail (20) and the rail supporting body (30) are made of different materials and fixed to each other by a 2K injection melt fusion process, a dove tail construction, mechanical fixtures and/or by sandwich moulding.

## Patentansprüche

1. Kunstharzführung (10) für eine Getriebevorrichtung, umfassend
(i) eine Gleitschiene (20) und
(ii) einen Schienenträgerkörper (30), der zwei Flansche (32, 34), zwei Trägerelemente, nämlich ein erstes Trägerelement (36) und ein zweites Trägerelement (38), eine Bahnschicht (40) und Verstärkungsrippen (50) umfasst, wobei die beiden Flansche ein oberer Flansch (32), der direkt mit der Rückseite der Gleitschiene (20) in Eingriff steht, und ein unterer Flansch (34) sind, und wobei sowohl die erste als auch die zweite geneigte Rippe eine mindestens teilkonkave Gestalt hat,
**dadurch gekennzeichnet, dass** der Schienenträgerkörper (30) eine erste geneigte Rippe (52-1), die sich von einer Position P-1a an dem unteren Flansch (34) nahe dem ersten Trägerelement (36) zu einer Position P-1b am oberen Flansch (32) nahe der Mitte der Führung (10) auf der Linie Y-Y', die in der Ebene der Bahnschicht (40) liegt und senkrecht zur Linie X-X' steht, die durch den Mittelpunkt S-1 des ersten Trägerelements und den Mittelpunkt S-2 des zweiten Trägerelements läuft, erstreckt, und eine zweite geneigte Rippe (52-2), die sich von einer Position P-2a an dem unteren Flansch nahe dem zweiten Trägerelement (38) zu einer Position P-2b am oberen Flansch (32) nahe der Mitte der Führung auf der Linie Y-Y' erstreckt, umfasst, wobei der Abstand von Positionen P-1b und P-2b von der Linie Y-Y' ungefähr 1/6 oder weniger des Abstands (L) zwischen dem Mittelpunkt S-1 des ersten Trägerelements und dem Mittelpunkt S-2 des zweiten Trägerelements beträgt, wobei der Abstand der Position P-1a vom ersten Trägerelement derart ist, dass die Länge der Projektion (P3) der Linie S-1, P-1a auf der Linie X-X' ungefähr 1/4 oder weniger des Abstands (L) zwischen dem Mittelpunkt S-1 des ersten Trägerelements und dem Mittelpunkt S-2 des zweiten Trägerelements beträgt, wobei der Abstand der Position P-2a vom ersten Trägerelement derart ist, dass die Länge der Projektion (P4) der Linie S-1, P-2a auf der Linie X-X' ungefähr 1/4 oder weniger des Abstands (L) zwischen dem Mittelpunkt S-1 des ersten Trägerelements und dem Mittelpunkt S-2 des zweiten Trägerelements beträgt.

2. Kunstharzführung nach Anspruch 1, wobei die Summe (S) der Längen der Projektion (P1) eines Liniensegments der Linie, die durch die Position (P-1a) am unteren Flansch (34) nahe dem ersten Trägerelement und die Position P1-b am oberen Flansch (32) nahe der Mitte der Führung läuft, wobei das Liniensegment der Linie das Liniensegment zwischen der Position P-1a am unteren Flansch nahe dem ersten Trägerelement und der Position P-1b am oberen Flansch nahe der Mitte der Führung ist, und der Projektion (P2) eines Liniensegments der Linie, die durch die Position P-2a am unteren Flansch nahe dem zweiten Trägerelement und die Position P-2b am oberen Flansch nahe der Mitte der Führung läuft, wobei das Liniensegment der Linie das Liniensegment zwischen der Position P-2a am unteren Flansch (34) nahe dem zweiten Trägerelement und der Position P-2b am oberen Flansch (32) nahe der Mitte der Führung ist, auf der Linie X-X' durch den Mittelpunkt S-1 des ersten Trägerelements (36) und Mittelpunkt S-2 des zweiten Trägerelements (38) mindestens 1/3 des Abstands (L) zwischen den Mittelpunkten S-1 und S-2 beträgt.

3. Kunstharzführung nach Anspruch 1 oder 2, wobei der Schienenträgerkörper (30) mindestens eine radiale Rippe (70), die in einem extremen Bereich (A,B) der Führung (10) liegt, wobei der extreme Bereich (A) definiert ist als der Bereich, der von der ersten geneigten Rippe (52-1) und extremen Teilen (32-a, 34-a) der beiden Flansche (32, 34) nahe dem ersten Trägerelement (36) eingeschlossen ist, und der extreme Bereich (B) definiert ist durch den Bereich, der von der zweiten geneigten Rippe (52-2) und extremen Teilen (32-b, 34-b) der beiden Flansche (32, 34) nahe dem zweiten Trägerelement (38) eingeschlossen ist, umfasst.

4. Kunstharzführung nach einem der Ansprüche 1-3, wobei die Führung eine Längsrippe (72), die sich im Mittelbereich (C) der Führung (10) befindet, wobei der Mittelbereich (C) definiert ist durch den Bereich, der von der ersten und der zweiten geneigten Rippe (52-1, 52-2) und Mittelteilen (32-c, 34-c) der beiden Flansche (32, 34) eingeschlossen ist, umfasst.

5. Kunstharzführung nach einem der Ansprüche 1-4, wobei die Bahnschicht mindestens eine Vertiefung oder mindestens ein Loch (80) im Mittelbereich (C) der Führung (10), wobei der Mittelbereich (C) definiert ist durch den Bereich, der von der ersten und der zweiten geneigten Rippe (52-1, 52-2) und Mittelteilen (32-c, 34-c) der beiden Flansche (32, 34) eingeschlossen ist, umfasst, oder wobei der Mittelbereich (C) überhaupt keine Bahnschicht umfasst.

6. Kunstharzführung nach einem der Ansprüche 1-5, wobei die Gleitschiene (20) aus unverstärktem thermoplastischem Material hergestellt ist.

7. Kunstharzführung nach einem der Ansprüche 1-5, wobei der Schienenträgerkörper (30) aus verstärktem thermoplastischem Material hergestellt ist.

8. Kunstharzführung nach einem der Ansprüche 1-5, wobei die Gleitschiene (20) und der Schienenträgerkörper (30) aus dem gleichen Material hergestellt und integral geformt sind.

9. Kunstharzführung nach einem der Ansprüche 1-5, wobei die Gleitschiene (20) und der Schienenträgerkörper (30) aus unterschiedlichen Materialien hergestellt und durch ein 2K-Spritzguss-Schmelzschweiß-Verfahren, eine Schwalbenschwanzkonstruktion, mechanische Befestigungen und/oder durch Verbundspritzgussverfahren aneinander befestigt sind.

## Revendications

1. Guide (10) en résine synthétique pour un dispositif de transmission, comprenant :
(i) un rail coulissant (20) et
(ii) un corps (30) de support de rail qui comprend deux brides (32, 34), deux éléments de support, à savoir un premier élément de support (36) et un deuxième élément de support (38), une couche de toile (40) et des nervures de renfort (50), les deux brides étant une bride supérieure (32) engagée directement sur le côté arrière du rail coulissant (20) et une bride inférieure (34), la première et la deuxième nervure inclinée ayant une forme au moins partiellement concave,
**caractérisé en ce que**
le corps (30) de support de rail comprend une première nervure inclinée (52-1) qui s'étend entre une position P-1a située sur la bride inférieure (34) à proximité du premier élément de support (36) jusqu'à une position P-1b située sur la bride supérieure (32) à proximité du centre du guide (10) sur la ligne Y-Y' située dans le plan de la couche de toile (40) et perpendiculaire à la ligne X-X' qui passe par le centre du premier élément de support S-1 et le centre du deuxième élément de support S-2, et une deuxième nervure inclinée (52-2) qui s'étend depuis une position P-2a située sur la bride inférieure à proximité du deuxième élément de support (38) jusqu'à une position P-2b située sur la bride supérieure (32) à proximité du centre du guide sur la ligne Y-Y', la distance entre les positions P-1b et P-2b par rapport à la ligne Y-Y' étant d'environ 1/6 fois ou moins la distance (L) entre le centre du premier élément de support S-1 et le centre du deuxième élément de support S-2, la distance entre la position P-1a et le premier élément de support étant telle que la longueur de la projection (P3) de la ligne S-1, P-1a sur la ligne X-X' est d'environ 1/4 fois ou moins la distance (L) entre le centre du premier élément de support S-1 et le centre du deuxième élément de support S-2, la distance entre la position P-2a et le premier élément de support étant telle que la longueur de la projection (P4) de la ligne S-2, P-2a sur la ligne X-X' est d'environ 1/4 fois ou moins la distance (L) entre le centre du premier élément de support S-1 et le centre du deuxième élément de support S-2.

2. Guide en résine synthétique selon la revendication 1, dans lequel la somme (S) des longueurs de la projection (P1) d'un segment de la ligne qui passe par la position P-1a située sur la bride inférieure (34) à proximité du premier élément de support et la position P-1b située sur la bride supérieure (32) à proximité du centre du guide, ledit segment de ligne étant le segment de ligne situé entre la position P-1a située sur la bride inférieure à proximité du premier élément de support et la position P-1b située sur la bride supérieure à proximité du guide et de la projection (P2) d'un segment de la ligne qui passe par la position P-2a située sur la bride inférieure à proximité du deuxième élément de support et la position P-2b située sur la bride supérieure à proximité du centre du guide, ledit segment de ligne étant le segment de ligne entre la position P-2a située sur la bride inférieure (34) à proximité du deuxième élément de support et la position P-2b située sur la bride supérieure (32) à proximité du centre du guide sur la ligne X-X' qui passe par le centre S-1 du premier élément de support (36) et le centre S-2 du deuxième élément de support (38) est d'au moins 1/3 fois la distance (L) entre les centres S-1, S-2.

3. Guide en résine synthétique selon les revendications 1 ou 2, dans lequel le corps (30) de support de rail comprend au moins une nervure radiale (70) située dans une zone d'extrémité (A, B) du guide (10), la zone d'extrémité (A) étant définie comme étant la zone délimitée par la première nervure inclinée (52-1) et les parties d'extrémité (32-a, 34-a) des deux brides (32, 34) à proximité du premier élément de support (36), la zone d'extrémité (B) étant définie comme étant la zone délimitée par la deuxième nervure inclinée (52-2) et les parties d'extrémité (32-b, 34-b) des deux brides (32, 34) à proximité du deuxième élément de support (38).

4. Guide en résine synthétique selon l'une quelconque des revendications 1 à 3, le guide comprenant une nervure longitudinale (72) située dans la partie centrale (C) du guide (10), la partie centrale (C) étant définie par la partie délimitée par la première et la deuxième nervure inclinée (52-1, 52-2) et les parties centrales (32-c, 34-c) des deux brides (32, 34).

5. Guide en résine synthétique selon l'une quelconque des revendications 1 à 4, dans lequel la couche de toile comprend au moins un creux ou au moins un trou (80) dans la partie centrale (C) du guide (10), la partie centrale (C) étant définie par la partie délimitée par la première et la deuxième nervure inclinée (52-1, 52-2) et les parties centrales (32-c, 34-c) des deux brides (32, 34), ou dans lequel la partie centrale (C) ne contient pas de couche de toile.

6. Guide en résine synthétique selon l'une quelconque des revendications 1 à 5, dans lequel le rail coulissant (20) est constitué d'un matériau thermoplastique non renforcé.

7. Guide en résine synthétique selon l'une quelconque des revendications 1 à 5, dans lequel le corps (30) de support de rail est constitué d'un matériau thermoplastique renforcé.

8. Guide en résine synthétique selon l'une quelconque des revendications 1 à 5, dans lequel le rail coulissant (20) et le corps (30) de support de rail sont réalisés en le même matériau et moulés d'un seul tenant.

9. Guide en résine synthétique selon l'une quelconque des revendications 1 à 5, dans lequel le rail coulissant (20) et le corps (30) de support de rail sont constitués de matériaux différents et sont fixés l'un à l'autre par une opération de fusion et d'injection de deux composants, une structure en queue d'aronde, des fixations mécaniques et/ou par moulage en sandwich.
